# EUROPEAN PATENT SPECIFICATION

(11) **EP 3 154 179 B1**
(45) Date of publication and mention of the grant of the patent: **19.09.2018**
(21) Application number: 16192925.2
(22) Date of filing: 07.10.2016
(51) Int. Cl.: H02K 33/16, H02K 7/06, H02K 7/18, H02K 35/02, H02K 35/04, H02K 16/00

(54) **VARIABLE STROKE LINEAR ELECTRODYNAMIC MACHINE**
LINEARE ELEKTRODYNAMISCHE MASCHINE MIT VERSTELLBAREM HUB
MACHINE ÉLECTRODYNAMIQUE LINÉAIRE À COURSE VARIABLE

(30) Priority: 09.10.2015 US 201514879715
(43) Date of publication of application: 12.04.2017
(73) Proprietor: Hamilton Sundstrand Corporation, Charlotte, NC 28217 (US)
(72) Inventor: HIMMELMANN, Richard A., Beloit, WI 53511 (US)
(74) Representative: Dehns

(56) References cited:
- WO-A1-03/077403
- US-A- 4 196 365
- US-A1- 2003 046 932
- US-A1- 2007 120 432

## Description

### BACKGROUND

This disclosure relates to electrodynamic machines, and in particular to electrodynamic machines having a variable stroke linear displacement relationship between a magnetic field generator and an armature.

In the simplest terms, electrodynamic machines utilize dynamic motion between magnetic fields and electrical currents to convert types of energy. For example, generators convert mechanical energy to electrical energy via the interaction of rotating magnetic fields and coils of wire, wherein motors convert electrical energy to mechanical energy via the interaction of magnetic fields. An electrodyanmic machine may therefore operate as either a generator or a motor depending on the direction of power flow (e.g., mechanical to electrical or electrical to mechanical), or can also be used to convert one form of electrical energy to another form of electrical energy. A multitude of electric machine architectures have been developed with various means of providing interaction between magnetic fields and coils of wire. For example, a permanent magnet machine (PMM), operating in a generating mode, utilizes permanent magnets to generate a constant magnetic field, which is rotated via the mechanical energy supplied by a prime mover such that the rotating magnetic field interacts with the stator coils to provide an output voltage. Another type of electric machine, again operating in a generating mode, supplies current through a coil to generate the desired magnetic field on the rotor, which is rotated via the mechanical energy supplied by a prime mover, such that a rotating magnetic field is created that interacts with the stationary stator coils to provide an output voltage.

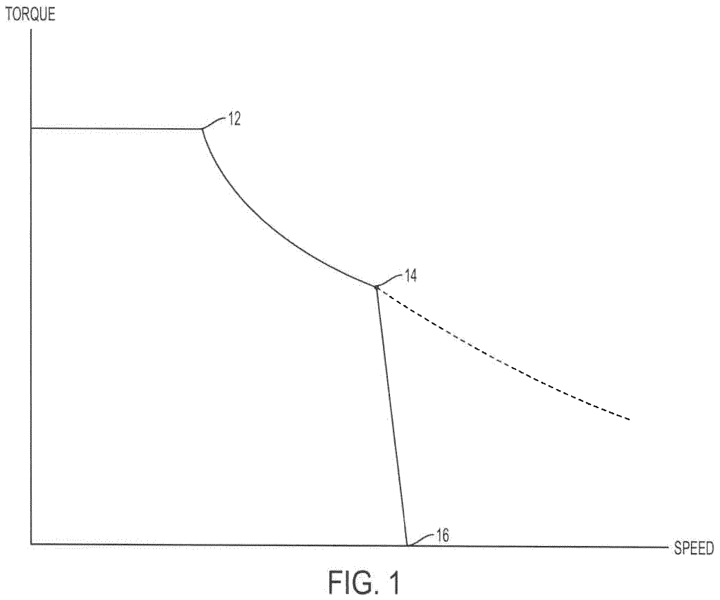

When used as a motor driven by a source of electric power, the back electromotive force (EMF) that an electrodynamic machine generates subtracts from the electrical potential of the power source. The power source must supply increasing electrical potential for increasing speed at constant torque. Eventually, the power source cannot supply additional potential and then the output torque of the dynamoelectric machine falls with increasing speed until no further torque is achievable. As a motor, a primary problem with this class of machines is that there is no convenient way to regulate the generated back EMF that increases with rotational speed. This phenomenon is illustrated in FIG. 1, which is a plot of torque versus speed for a typical permanent magnet motor. As shown in FIG. 1, at low speeds (speeds below corner point 12 of the plot line), relatively constant torque is provided with increasing speed, and adequate voltage is available to meet the motor's current requirement. At speeds between corner points 12 and 14 of the plot line, torque begins to fall off, but the motor is under control, producing constant horsepower as back EMF increases and phase current drops. When the speed reaches and begins to exceed that at corner point 14 of the plot line, the motor becomes uncontrollable, and increasing back EMF and falling phase current effectively limit further speed increase. At plot point 16, the motor reaches its maximum speed limit.

When used as a generator, the electrical potential that a conventional electrodynamic machine generates is primarily proportional to the rotational speed of the rotor assembly and the power consumed by an electrical load. As a generator, a primary problem with this class of machines is that there is no convenient way to regulate the generated electrical potential that may vary with rotational speed and load variations.

Various approaches have been tried for addressing the above issues by controlling or limiting magnetic flux under specified operating conditions, e.g., reducing a motor's back EMF at speeds beyond the corner point 14 of FIG. 1 to provide higher speeds as represented by the dashed portion of the plot line. The known approaches such as US 4196365, have their own advantages or disadvantages, and new approaches continue to be welcomed for consideration.

### BRIEF DESCRIPTION

In some aspects of the disclosure, an electrodynamic machine comprises a magnetic field generator and an armature in a linear moving relationship with each other along a first axis. A swash plate rotates about a second axis parallel to and offset from the first axis. The swash plate comprises a surface in slidable engagement with an end of the magnetic field generator or an end of the armature. This swash plate surface is at a controllably variable angle to the second axis. As the swash plate rotates, the point at which the angled swash plate surface intersects the first axis at the end of the magnetic field generator or armature will move back and forth along the first axis. This axial repositioning of the contact point between the rotating angled swash plate surface and the end of the magnetic field generator or armature provides a linear displacement between the magnetic field generator and the armature in response to rotation of the swash plate.

In some aspects, an electrodynamic system comprises the above electrodynamic machine and a controller in operative communication with the swash plate for controlling the angle of the angled swash plate surface.

In some aspects, a method of operating the above-described machine comprises rotating the swash plate about the second axis, thereby causing linear displacement between the magnetic field generator and the armature along the first axis. In some aspects, the method can also include controlling the angle of the angled surface of the swash plate with respect to the second axis.

### BRIEF DESCRIPTION OF THE DRAWINGS

Subject matter of this disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a schematic depiction of a plot of torque versus speed for an electric permanent magnet motor;
FIG. 2 is a schematic depiction of a perspective view of an example of a variable stroke linear electrodynamic machine; and
FIG. 3 is a schematic depiction of a cross-sectional view of an example of a variable stroke linear electrodynamic machine.

### DETAILED DESCRIPTION

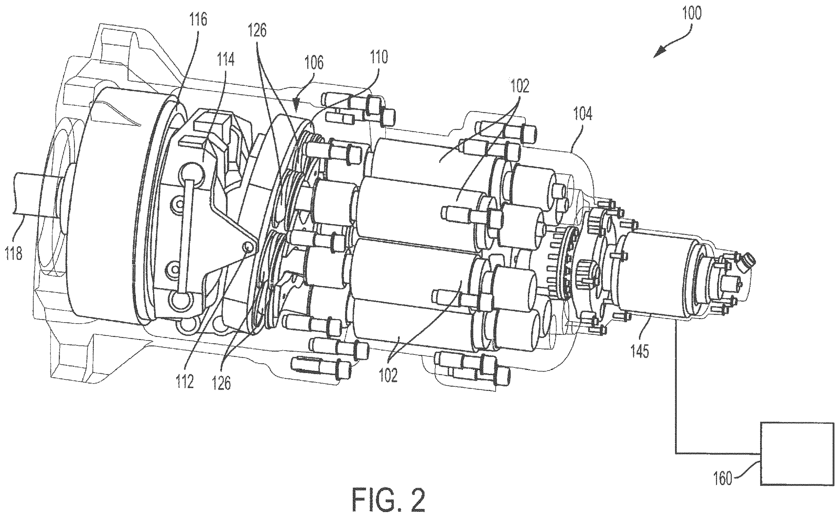

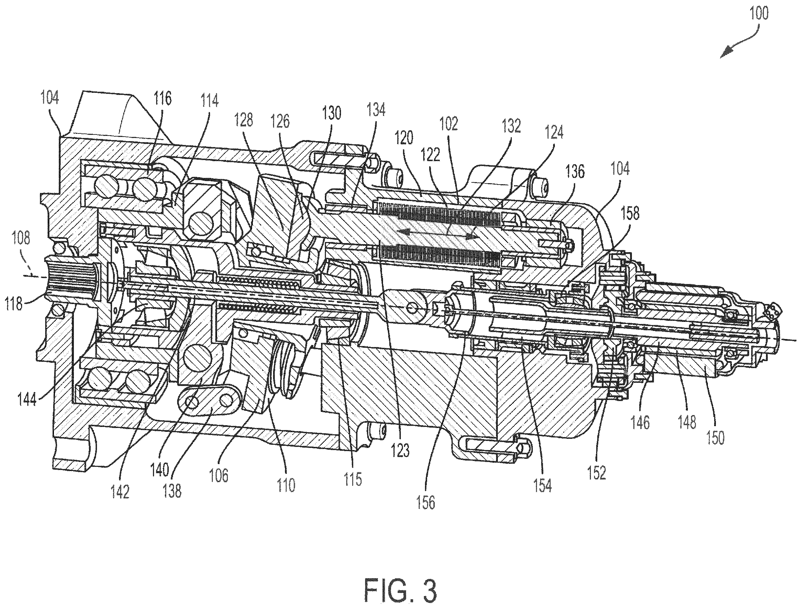

Referring now to FIGS 2 and 3, an example embodiment of an electrodynamic machine is depicted in perspective and cross-sectional views. As shown in the figures, an electrodynamic machine 100 is depicted having linearly-displaceable magnet-armature assemblies 102 disposed in a housing 104. A swash plate 106 rotates about an axis 108 and is angled to provide a surface 110 that is at an angle with respect to the first axis 108. The angle can theoretically be varied from just greater than zero (where maximum linear displacement of the magnet-armature assemblies is obtained) up to perpendicular (where no linear displacement is obtained), although in practice the swash plate 106 and magnet-armature assemblies 102 can be configured to achieve the maximum designed linear displacement (i.e., full stroke) of the magnet-armature assemblies at a specified minimum swash plate angle with respect to the first axis 108 (e.g., 45°). As shown in FIG. 2, the swash plate 106 is secured along a pivot axis by pivot pin 112 on collar 114. A second pivot pin (not shown) secures the swash plate along the rear side hidden from view in FIG. 2. The rotating swash plate 106 is also secured by bearing 115. The collar 114 and swash plate 106 rotate together about the axis 108, supported by bearing 116. The collar is connected to rotating shaft 118, which can be a mechanical output (e.g., a drive shaft) when operated as an electric motor or a primary mover when operated as a generator.

As shown generally in FIG. 2, and in more detail for one of the magnet-armature assemblies 102 in FIG. 3, the magnet-armature assemblies 102 include a stationary armature or stator with a stator back iron 120 and a stator winding 122 juxtaposed with a magnetic field generator 123 having magnets/spacers 124. An end of the field generator 123 away from the magnetic field generated by the magnets/spacers 124 is engaged with the angled swash plate surface 110 through slipper elements 126. Slipper elements 126 can be formed from a low-friction material such as metal coated with a low-friction coating such as polytetrafluoroethylene or dry film lubricated metal. Alternatively, the slipper elements can be made from an untreated metal operating in an oil-flooded cavity. In the example configuration shown in FIG. 1, the slipper elements have a flat surface 128 engaged with the angled swash plate surface 110 and a curved surface 130 engaged with a corresponding curved surface on the end of the magnetic field generator 123. The flat slipping surface engagement between the slipper surface 128 and a flat surface 110 on the angled swash plate provides for smooth translation of rotational energy and motion of the swash plate to linear energy and motion of the magnetic field generator 123 along the axis 132. The curved slipping engagement surface between the slipper surface 130 and the end of the magnetic field generator 123 allows for movement swash plate 106 through different angles of inclination without radial stress on the magnetic field generator 123.

As will be appreciated by the skilled person, as the swash plate rotates, the point at which the angled swash plate surface intersects the axis 132 at the end of the magnetic field generator 123 will move back and forth along the axis 132, thus providing a back and forth linear displacement or stroke of the magnetic field generator 123 along axis 132, supported by linear bearings 134 and 136. Varying the angle of inclination of the swash plate 106 will vary the length of the linear stroke of the magnetic field generator 123 with each half-rotation of the swash plate 106, allowing for control of the electrodynamic interaction between the moving magnetic field from magnets/spacers 124 and the stationary windings 122. A low angle of the swash plate surface 110 with respect to the axis 108 will produce a longer linear stroke of the magnetic field generator, and higher angles of the swash plate surface 110 with respect to the axis 108 will produce shorter strokes, up to an angle perpendicular (i.e., 90°) with the axis 108 produces a stroke of zero, or no linear displacement of the magnetic field generator 123.

In the embodiment exemplified in FIGS. 2 and 3, the angle of the swash plate is controlled through a pivot linkage, with pivot linkage member 138 connected to the swash plate 106 and to pivot linkage member 140, and pivot linkage member 140 connected to and controlled by linear motion of push rod 142 supported by push rod bearing 144. Push rod 142 can be controlled by any linear actuator, including an electromechanical actuator such as a rotary electric motor coupled with a screw mechanism, a pneumatic linear actuator, a hydraulic linear actuator, or an electrical linear actuator. In the example embodiment depicted in FIG. 2, the linear actuator 145 is a rotary electric motor having rotor 146 with permanent magnet 148, an actuator motor stator 150. Rotational motion of the rotor 146 is transferred through planetary gear reduction stage 152 to screw mechanism 154, in which the rotational motion of the rotary electric motor is translated to linear motion through ball screw assembly 156, supported by ball screw thrust bearings 158.

It will be appreciated by the skilled person that the embodiments illustrated in FIGS. 2 and 3 are specific examples of a broader concept. For example, FIG. 3 depicts a linearly-movable magnetic field generator and a stationary armature. However, the armature could be the linear moving piece (with appropriate accommodation for electrical connections) engaged with the swash plate and the magnetic field generator kept stationary. Differently-shaped or configured components such as slipper components are also contemplated for use herein, and likewise for other components such as actuators for changing the swash plate angle. Also, FIG. 2 depicts an embodiment with seven magnet-armature assemblies 102, but embodiments are contemplated with other numbers of magnet-armature assemblies ranging from one to numbers limited only by the physical footprint and design parameters of the machine.

In some aspects, the electrodynamic machine 100 is connected to a controller 160, which can be any type of known controller such as an electronic control unit (ECU), microprocessor, etc., which can be configured to operate various aspects of the electrodynamic machine 100. In operation, the angle of the swash plate can be varied to achieve desired electrodynamic performance characteristics from the electrodynamic machine. For example, the controller 160 can be configured to increase the angle of the angled swash plate surface with respect to the second axis in response to an increase in the electrodynamic machine's EMF, a reduction in the electrodynamic machine's phase current, a reduction in the electrodynamic machine's torque, or a combination comprising any of the foregoing. For example, when the controller 160 determines through monitoring of electrical and mechanical inputs and outputs to and from the electrodynamic machine 100 operating as an electric motor that a corner point 14 (FIG. 1) is reached where further speed increases will destabilize the motor, the controller 160 can direct the angle of the swash plate with respect to its axis of rotation to increase closer to perpendicular, thus shortening the stroke of the magnetic field generators 123 to reduce back EMF and maintain the performance of the motor along the dotted portion of the plot line in FIG. 1.

## Claims

1. An electrodynamic machine (100), comprising
a magnetic field generator (123) and an armature in a linear moving relationship with each other along a first axis; and
a swash plate (106) rotating about a second axis parallel to and offset from the first axis, the swash plate comprising a surface in slidable engagement with an end of the linear moving piece, wherein the linear moving piece is the magnetic field generator or an end of the armature, said surface being at a controllably variable angle to the second axis, thereby providing linear displacement between the magnetic field generator and the armature in response to rotation of the swash plate.

2. The electrodynamic machine (100) of claim 1, wherein the magnetic field generator is in slidable engagement with the angled surface of the swash plate.

3. The electrodynamic machine (100) of claim 1, wherein the armature is in slidable engagement with the swash plate surface.

4. The electrodynamic machine (100) of any of claims 1-3, wherein the magnetic field generator comprises a permanent magnet.

5. The electrodynamic machine (100) of any of claims 1-4, comprising a plurality of magnetic field generators or armatures having ends in slidable engagement with the swash plate surface.

6. The electrodynamic machine (100) of any of claims 1-5, further comprising a slipper component disposed between the swash plate surface and the end of the magnetic field generator or armature that is in slidable engagement with the swash plate surface, said slipper component comprising a flat surface in slidable engagement with the swash plate surface and a curved surface in rotational engagement with a curved surface on the end of the magnetic field generator or armature.

7. The electrodynamic machine (100) of any of claims 1-6, further comprising a sensor to determine the angle of the angled surface of the swash plate with respect to the second axis.

8. The electrodynamic machine (100) of any of claims 1-7, further comprising an actuator operatively connected to the swash plate for varying the angle of the angled swash plate surface with respect to the second axis.

9. The electrodynamic machine (100) of claim 8, wherein the actuator comprises a pivot linkage actuated by a push rod and optionally a position sensor to determine the position of the push rod.

10. The electrodynamic machine (100) of claim 9, wherein the push rod is actuated linearly along a third axis parallel to or coincident with the first axis by a linear actuator.

11. An electrodynamic system comprising the electrodynamic machine (100) of any of claims 1-10 and a controller in operative communication with the swash plate for controlling the angle of the angled swash plate surface.

12. The electrodynamic system according to claim 11, wherein the controller is configured to increase the angle of the angled swash plate surface with respect to the second axis in response to an increase in the electrodynamic machine's EMF, a reduction in the electrodynamic machine's phase current, a reduction in the electrodynamic machine's torque, or a combination comprising any of the foregoing.

13. A method of operating the electrodynamic machine (100) of any of claims 1-12, comprising rotating the swash plate about the second axis, thereby causing linear displacement between the magnetic field generator and the armature along the first axis.

14. The method of claim 13, further comprising controlling the angle of the angled swash plate surface with respect to the second axis.

15. The method of claim 14, wherein the angle of the angled swash plate surface with respect to the second axis is increased in response to an increase during operation as a motor of the electrodynamic machine's EMF, a reduction in the electrodynamic machine's phase current, a reduction in the electrodynamic machine's torque, or a combination comprising any of the foregoing.

## Patentansprüche

1. Elektrodynamische Maschine (100), umfassend
einen Magnetfeldgenerator (123) und eine Armatur in einer Linearbewegungsbeziehung zueinander entlang einer ersten Achse; und
eine Taumelscheibe (106), die sich um eine zweite Achse parallel zu und versetzt zu der ersten Achse dreht, wobei die Taumelscheibe eine Fläche in gleitendem Eingriff mit einem Ende des sich linear bewegenden Teils umfasst, wobei das sich linear bewegende Teil der Magnetfeldgenerator oder ein Ende der Armatur ist, wobei die Fläche in einem steuerbar variablen Winkel zu der zweiten Achse ist, wodurch als Reaktion auf Drehung der Taumelscheibe lineare Verschiebung zwischen dem Magnetfeldgenerator und der Armatur bereitgestellt wird.

2. Elektrodynamische Maschine (100) nach Anspruch 1, wobei der Magnetfeldgenerator in gleitendem Eingriff mit der gewinkelten Taumelscheibenfläche ist.

3. Elektrodynamische Maschine (100) nach Anspruch 1, wobei die Armatur in gleitendem Eingriff mit der Taumelscheibenfläche ist.

4. Elektrodynamische Maschine (100) nach einem der Ansprüche 1-3, wobei der Magnetfeldgenerator einen Permanentmagneten umfasst.

5. Elektrodynamische Maschine (100) nach einem der Ansprüche 1-4, umfassend eine Vielzahl von Magnetfeldgeneratoren oder Armaturen, die Enden in gleitendem Eingriff mit der Taumelscheibenfläche aufweisen.

6. Elektrodynamische Maschine (100) nach einem der Ansprüche 1-5, ferner umfassend eine Schleifstückkomponente, die zwischen der Taumelscheibenfläche und dem Ende des Magnetfeldgenerators oder der Armatur, das in gleitendem Eingriff mit der Taumelscheibenfläche ist, angeordnet ist, wobei die Schleifstückkomponente eine flache Fläche in gleitendem Eingriff mit der Taumelscheibenfläche und eine gebogene Fläche in Dreheingriff mit einer gebogenen Fläche an dem Ende des Magnetfeldgenerators oder der Armatur umfasst.

7. Elektrodynamische Maschine (100) nach einem der Ansprüche 1-6, ferner umfassend einen Sensor, um den Winkel der gewinkelten Taumelscheibenfläche in Bezug auf die zweite Achse zu bestimmen.

8. Elektrodynamische Maschine (100) nach einem der Ansprüche 1-7, ferner umfassend einen Aktor, der mit der Taumelscheibe wirkverbunden ist, um den Winkel der gewinkelten Taumelscheibenfläche in Bezug auf die zweite Achse zu variieren.

9. Elektrodynamische Maschine (100) nach Anspruch 8, wobei der Aktor ein Schwenkgestänge, das durch einen Stößel betätigt wird, und optional einen Positionssensor zum Bestimmen der Position des Stößels umfasst.

10. Elektrodynamische Maschine (100) nach Anspruch 9, wobei der Stößel durch einen linearen Aktor linear entlang einer dritten Achse parallel zu oder koinzident mit der ersten Achse betätigt wird.

11. Elektrodynamisches System, umfassend die elektrodynamische Maschine (100) nach einem der Ansprüche 1-10 und eine Steuerung in Wirkverbindung mit der Taumelscheibe, um den Winkel der gewinkelten Taumelscheibenfläche zu steuern.

12. Elektrodynamisches System nach Anspruch 11, wobei die Steuerung konfiguriert ist, um den Winkel der gewinkelten Taumelscheibenfläche in Bezug auf die zweite Achse als Reaktion auf eine Erhöhung der elektromotorischen Kraft der elektrodynamischen Maschine, eine Reduzierung des Phasenstroms der elektrodynamischen Maschine, eine Reduzierung des Drehmoments der elektrodynamischen Maschine oder eine Kombination, die beliebiges des Vorstehenden umfasst, zu erhöhen.

13. Verfahren zum Betreiben der elektrodynamischen Maschine (100) nach einem der Ansprüche 1-12, umfassend das Drehen der Taumelscheibe um die zweite Achse, wodurch lineare Verschiebung zwischen dem Magnetfeldgenerator und der Armatur entlang der ersten Achse bewirkt wird.

14. Verfahren nach Anspruch 13, ferner umfassend das Steuern des Winkels der gewinkelten Taumelscheibenfläche in Bezug auf die zweite Achse.

15. Verfahren nach Anspruch 14, wobei der Winkel der gewinkelten Taumelscheibenfläche in Bezug auf die zweite Achse als Reaktion auf eine Erhöhung der elektromotorischen Kraft der elektrodynamischen Maschine während des Betriebs als Motor, eine Reduzierung des Phasenstroms der elektrodynamischen Maschine, eine Reduzierung des Drehmoments der elektrodynamischen Maschine oder eine Kombination, die beliebiges des Vorstehenden umfasst, erhöht wird.

## Revendications

1. Machine électrodynamique (100) comprenant
un générateur de champ magnétique (123) et un induit dans une relation de mouvement linéaire mutuel le long d'un premier axe ; et
une plaque de nutation (106) tournant autour d'un deuxième axe parallèle au premier axe et décalé de celui-ci, la plaque de nutation comprenant une surface en prise coulissante avec une extrémité de la pièce mobile linéaire, dans laquelle la pièce mobile linéaire est le générateur de champ magnétique ou une extrémité de l'induit, ladite surface étant disposée sous un angle variable qui peut être commandé par rapport au deuxième axe, fournissant de la sorte un déplacement linéaire entre le générateur de champ magnétique et l'induit en réponse à la rotation de la plaque de nutation.

2. Machine électrodynamique (100) selon la revendication 1, dans laquelle le générateur de champ magnétique est en prise coulissante avec la surface angulaire de la plaque de nutation.

3. Machine électrodynamique (100) selon la revendication 1, dans laquelle l'induit est en prise coulissante avec la surface de la plaque de nutation.

4. Machine électrodynamique (100) selon l'une quelconque des revendications 1 à 3, dans laquelle le générateur de champ magnétique comprend un aimant permanent.

5. Machine électrodynamique (100) selon l'une quelconque des revendications 1 à 4, comprenant une pluralité de générateurs de champ magnétique ou d'induits ayant des extrémités en prise coulissante avec la surface de la plaque de nutation.

6. Machine électrodynamique (100) selon l'une quelconque des revendications 1 à 5, comprenant en outre un composant décaleur disposé entre la surface de la plaque de nutation et l'extrémité du générateur de champ magnétique ou de l'induit qui est en prise coulissante avec la surface de la plaque de nutation, ledit composant décaleur comprenant une surface plate en prise coulissante avec la surface de la plaque de nutation et une surface incurvée en prise rotative avec une surface incurvée à l'extrémité du générateur de champ magnétique ou de l'induit.

7. Machine électrodynamique (100) selon l'une quelconque des revendications 1 à 6, comprenant en outre un capteur pour déterminer l'angle de la surface angulaire de la plaque de nutation par rapport au deuxième axe.

8. Machine électrodynamique (100) selon l'une quelconque des revendications 1 à 7, comprenant en outre un actionneur raccordé en service à la plaque de nutation pour faire varier l'angle de la surface angulaire de la plaque de nutation par rapport au deuxième axe.

9. Machine électrodynamique (100) selon la revendication 8, dans laquelle l'actionneur comprend une liaison pivotante actionnée par une tige de poussée et éventuellement un capteur de position pour déterminer la position de la tige de poussée.

10. Machine électrodynamique (100) selon la revendication 9, dans laquelle la tige de poussée est actionnée en mode linéaire le long d'un troisième axe parallèle ou coïncidant avec le premier axe par un actionneur linéaire.

11. Système électrodynamique comprenant la machine électrodynamique (100) selon l'une quelconque des revendications 1 à 10 et un dispositif de commande en communication fonctionnelle avec la plaque de nutation pour commander l'angle de la surface angulaire de la plaque de nutation.

12. Système électrodynamique selon la revendication 11, dans lequel le dispositif de commande est configuré pour augmenter l'angle de la surface angulaire de la plaque de nutation par rapport au deuxième axe en réponse à une augmentation de l'EMF de la machine électrodynamique, à une réduction dans le courant de phase de la machine électrodynamique, à une réduction du couple de la machine électrodynamique ou à une combinaison comprenant l'une quelconque des situations précédentes.

13. Procédé de fonctionnement de la machine électrodynamique (100) selon l'une quelconque des revendications 1 à 12, comprenant la rotation de la plaque de nutation autour du deuxième axe, provoquant de la sorte un déplacement linéaire entre le générateur de champ magnétique et l'induit le long du premier axe.

14. Procédé selon la revendication 13, comprenant en outre la commande de l'angle de la surface angulaire de la plaque de nutation par rapport au deuxième axe.

15. Procédé selon la revendication 14, dans lequel l'angle de la surface angulaire de la plaque de nutation par rapport au deuxième axe est augmenté en réponse à une augmentation en cours de fonctionnement comme moteur de l'EMF de la machine électrodynamique, à une réduction du courant de phase de la machine électrodynamique, à une réduction du couple de la machine électrodynamique ou à une combinaison comprenant l'une quelconque des situations antérieures.
